(19) **Europäisches Patentamt / European Patent Office / Office européen des brevets**

(11) **EP 4 483 244 B1**

(12) **EUROPEAN PATENT SPECIFICATION**

(45) Date of publication and mention of the grant of the patent:
**18.02.2026 Bulletin 2026/08**

(21) Application number: **22706849.1**

(22) Date of filing: **21.02.2022**

(51) International Patent Classification (IPC):
**G05B 13/04** *(2006.01)*

(52) Cooperative Patent Classification (CPC):
**G05B 13/041**

(86) International application number:
**PCT/EP2022/054258**

(87) International publication number:
**WO 2023/156017 (24.08.2023 Gazette 2023/34)**

(54) **METHOD AND DEVICE FOR CONTROLLING A TECHNICAL SYSTEM IN REAL TIME**

VERFAHREN UND VORRICHTUNG ZUR ECHTZEITSTEUERUNG EINES TECHNISCHEN SYSTEMS

PROCÉDÉ ET DISPOSITIF DE COMMANDE EN TEMPS RÉEL D'UN SYSTÈME TECHNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.01.2025 Bulletin 2025/01**

(73) Proprietor: **VOLVO TRUCK CORPORATION**
**405 08 Göteborg (SE)**

(72) Inventors:
• **GELSO, Esteban**
  **421 51 GÖTEBORG (SE)**
• **LAINE, Leo**
  **438 94 HÄRRYDA (SE)**
• **VILCA, José**
  **421 71 GÖTEBORG (SE)**
• **JANARDHANAN, Sachin**
  **425 32 HISINGS KÄRRA (SE)**
• **TAGESSON, Kristoffer**
  **663 41 HAMMARÖ (SE)**

(74) Representative: **Kransell & Wennborg KB**
**P.O. Box 2096**
**403 12 Göteborg (SE)**

(56) References cited:
EP-A1- 2 597 539    US-A1- 2012 197 469
US-A1- 2012 307 926    US-A1- 2018 123 708
US-B1- 9 352 635

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

## TECHNICAL FIELD

The present disclosure relates to the field of optimization-assisted automatic control technology. In particular, it proposes a method where multiple optimization processes are allocated a predetermined time period to solve an optimal-control problem (OCP), after which a comparison singles out the best solution and/or eliminates insufficiently converged solutions. The method can be applied to the control allocation problem in an electric vehicle, which is typically under-determined.

## BACKGROUND

In vehicles like battery-electric vehicles or fuel-cell vehicles, several actuators in the powertrain are available to perform a required motion. The powertrain is normally an over-actuated system (more controlled inputs than outputs), so that its control represents an under-determined problem (fewer equations than unknowns), and a coordination of the actuators for motion is required. This coordination can be referred to as control allocation. It would be desirable to use optimization-assisted automatic control techniques, and more precisely to treat and solve the control allocation problem as an OCP. While the processing power sufficient to repeatedly solve the evolving OCP at runtime can normally be ensured today, the usefulness of optimization techniques is still restrained by the fact that numerical optimization solvers incidentally produce erroneous outputs due to convergence problems, artefacts, instabilities and the like. At instances when no control signal is available to be fed to the actuators, it may be necessary to trigger an emergency stop or to apply a predetermined 'safe' substitute control signal. Neither of these strategies is satisfactory from a usability point of view.

Specifically, in order to comply with a required Automotive Safety Integrity Level (ASIL), the potential hazards caused by malfunctioning electrical or electronic systems should be eliminated or reduced. When optimization processes based on iterative methods are used in critical control strategies, there is always a concern that the optimizers will not be able to compute a good solution in the scheduled time in an electronic control unit (ECU) of the vehicle. Moreover, being compelled to use a sub-optimal solution could impact energy consumption, mechanical wear, ride comfort and drivability.

The patent application published as EP2597539A1 relates to a method and to an arrangement for defining an autoregressive-moving-average model with exogenous inputs (ARMAX model) for deriving a predicted output signal, and also to a method for controlling and/or performing a technical process using the defined ARMAX model. In particular, that publication discloses a method for controlling a technical system in real time, comprising sensing a state of the technical system; with the sensed state, initiating an execution of an optimization process configured to solve a predefined optimization problem related to optimal control of the technical system; after a predetermined delay, extracting a current solution vector from the optimization process. The present invention addresses the problem of improving the optimization process known from EP2597539A1, in particular as regards safety.

## SUMMARY

One objective of the present disclosure is to make available a method for controlling a technical system in real time. To be suitable for this use case, such a method will need to provide a reliable control signal virtually always, that is, it will need to have a controlled and very low failure rate $\lambda$. It is a further objective to provide a method suitable for controlling an electric vehicle, and a battery-electric vehicle in particular. A still further objective is to provide a device and computer program with these abilities.

At least some of these objectives are achieved by the invention as defined by the independent claims. The dependent claims relate to advantageous embodiments of the invention .

In a first aspect, there is provided a method for controlling an over-actuated technical system in real time, comprising: sensing a state of the technical system; with the sensed state, initiating independent executions of a plurality of optimization processes $P_1, P_2, P_3, \ldots$ configured to solve a predefined optimization problem related to optimal control of the technical system; after a predetermined delay, extracting a current solution vector $u_1, u_2, u_3, \ldots$ from each optimization process; computing differences $d_{ij} \sim \|u_i - u_j\|$ for pairs of the solution vectors; and, on the basis of the differences, selecting at least one of the solution vectors for use in controlling the technical system. The selection of said one of the solution vectors includes executing a voting scheme in which clusters of the solution vectors are formed and the solution vector to be used is selected from the largest one of the clusters.

By considering differences between pairs of the solution vectors, on the one hand, it is possible to discover 'outliers' among the solution vectors, which likely correspond to *unreliable solutions.* An optimization process of the iterative type which has not converged sufficiently in the predetermined delay generally delivers an unreliable solution. Although the proposed consideration of the differences is merely an indirect indication, it is much simpler in practical cases than trying to establish the degree of reliability by directly evaluating the past execution of the optimization process concerned, e.g., by inspecting internal variables. On the other hand, the availability of the differences enables various cooperative decision-making schemes, by which the relatively most *promising solution(s)* can be found.

The difference-based processing constitutes a meaningful way of leveraging the availability of multiple optimization processes $P_1, P_2, P_3, ...$, in a manner that is certain to lower the failure rate $\lambda$ of the control method as a whole. It is worth mentioning that this advantage would not be achieved by redundancy alone, say, if the difference-based approach according to the invention was replaced by straightforwardly applying a linear average of the respective solution vectors $u_1, u_2, u_3, ...$ as the control signal to the technical system. Not only could the unreliable solutions have a strong negative influence on such an average, notably because of their considerable deviation from the set of healthy solutions. But even a pair of healthy solutions could correspond to two radically different control strategies, by which two widely separated trajectories (in the state space of the technical system) have been chosen from the sensed initial state of the system to the desired final state. Indeed, none of the optimization processes has endorsed the operating the system at the intermediate points in state space, there is no certainty that the cost of carrying out the average-based trajectory is similar to that of the solution vectors, and the average-based trajectory could be unachievable under the dynamics that apply for the technical system.

In some embodiments, the method according to the first aspect includes a further step of obtaining a quality indicator $q_1, q_2, q_3, ...$ relating to the execution of each optimization process. Needless to say, it is the execution which produced the solution vectors that is of interest here, i.e., normally the most recent one when the method is used in a real-time control application. The quality indicator is used to weight the differences between solution vectors in accordance with the respective quality indicators. This embodiment is primarily useful in a context where all or some of the optimization processes provide a quality indicator, such as a final step size or another convergence indicator, or a flag which if positively valued indicates that a problem or failure has occurred during the execution. The weighting shall be such that a difference relating to a solution vector with relatively inferior quality is increased, whereby the likelihood increases that this solution vector will be treated as unreliable. For example, the weights may be applied as inverse weighting coefficients of the difference in a setup where high $q_i$ represents high quality, as follows:

$$d_{ij} = \frac{\|\boldsymbol{u}_i - \boldsymbol{u}_j\|}{q_i q_j}.$$

In some embodiments, the selection of said one of the solution vectors includes performing a dimensionality reduction or dimension reduction. Such techniques are useful for exposing the degree of similarity of different solution vectors in visual or numerical form. It may also contribute to reducing the computational complexity of a task, later in this method, of grouping the solution vectors.

The selection of said one of the solution vectors includes executing a voting scheme. The voting scheme may be one in which clusters of the solution vectors are formed and the solution vector to be used is selected from the largest one of the clusters. Various clustering techniques can be applied for this purpose, whether in accordance with an ordinary implementation or with the specific adaptations to be described below.

In one embodiment, at least one of the optimization processes is a trained prediction model. The trained prediction model may be an artificial neural network which has been exposed to training data comprising problem-solution pairs, where each pair includes an optimization problem of the relevant type and a solution vector to this problem that an optimization solver (e.g., software implementing an iterative or non-iterative algorithm) has provided. The optimization problem and its solutions are represented in numerical form. A problem-solution pair may be verified for use as training data by checking, for each solution vector, that the optimization solver executed without problems and had sufficient time to converge as expected. The trained prediction model will mimic the behavior of the optimization solver on which it was trained, though generally at a much lower computational cost, and may thus be described conceptually as a *virtual solver.*

In one embodiment, the technical system to be controlled is a propulsion system (or powertrain, or drivetrain) in a road vehicle. The controlled inputs include inputs to a plurality of electric drives, which may have different gear ratios and/or different acceleration/regeneration power limits. In the present disclosure, the term "road vehicle" shall include cars, buses, long-haul trucks, as well as light and heavy construction equipment and all-terrain vehicles. The term excludes rail vehicles and various types of suspended vehicles.

In a second aspect of the invention, there is provided a controller configured to control a technical system in real time. The controller may be implemented as a general-purpose computer executing suitable software. For example, it may comprise memory, a signal interface and processing circuitry configured to perform the method of the first aspect of the invention. The second aspect of the invention generally shares the effects and advantages of the first aspect, and it can be embodied with a corresponding degree of technical variation.

The invention further relates to a computer program containing instructions for causing a computer, or the controller in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless explicitly stated.

## BRIEF DESCRIPTION OF THE DRAWINGS

Aspects and embodiments are now described, by way of example, with reference to the accompanying drawings, on which:

figure 1 shows, in block-diagram form, a controller configured to produce a control signal $u$ to be applied to a technical system which implements a received setpoint signal $r$;

figure 2 is a flowchart of a method according to embodiments herein;

figure 3 shows a road vehicle;

figures 4 and 5 are functional block diagrams illustrating a working principle of some embodiments herein; and

figure 6 is a plot in reduced-dimension space showing clusters of solution vectors that have been extracted from different optimization processes configured to solve a common optimization problem.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

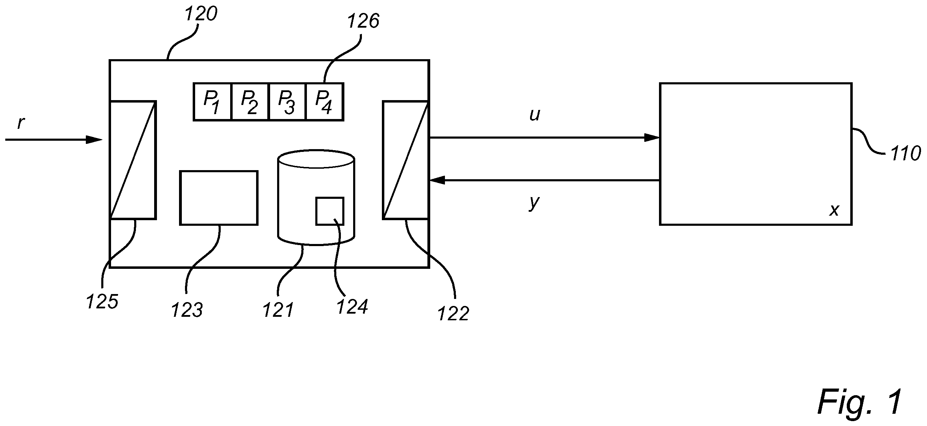

Figure 1 is a block diagram depicting a technical system 110 associated with a controller 120. The controller 120 is configured to produce a control signal $u$ to be applied to the technical system 110 on the basis of a setpoint signal $r$ (or reference signal) and an observation signal $y$. The technical system 110 can be modeled mathematically, e.g., as a time-invariant linear dynamical system, time-invariant nonlinear dynamical system or a time-dependent dynamical system. The time evolution of a linear dynamical system with a state vector x may be governed by the following equations:

$$\begin{cases} x'(t) = Ax(t) + Bu(t) \\ y(t) = Cx(t) + Du(t) \end{cases}$$

where $A, B, C, D$ are constant matrices, which are constant with respect to time if the system is time-invariant. A nonlinear system model may have the following appearance:

$$\begin{cases} x'(t) = f(x(t), u(t), t) \\ y(t) = g(x(t), u(t), t) \end{cases}$$

Here, the time dependence of functions $f, g$ is absent if the modeled nonlinear dynamical system is time-invariant.

An overreaching purpose of the controller 120 is to provide a control signal $u$ which causes the system 110 to evolve in such manner that the setpoint signal r is achieved or approximately achieved. Accordingly, the controller 120 realizes a mapping from $r$ to $u$, which mapping may have a dependence on past and/or current values of $y$. The setpoint signal r can be provided by an operator, an executing software process, a networked computer; in the particular case of a vehicle, it may be provided by the driver. The setpoint signal r can be expressed as a value of the observation signal, in which case it is achieved when $r(t) = y(t)$. Alternatively, the setpoint signal r can be expressed in terms of one of the state variables of the system (i.e., as one of the components of x) or a combination of these which is of relevance to the person or device which provides the setpoint signal r. The task of generating a control signal $u$ by which the technical system 110 achieves the setpoint signal r in time $|t_0 - t_f|$ in the most economical manner may be referred to as an optimal control problem. It may be formulated, in discrete or continuous time, as the minimization of a cost functional J subject to the system dynamics and various further constraints $C1, C2, ...$:

$$\min_{\boldsymbol{u}} \quad J\big(x(\cdot), u(\cdot), t_0, t_f\big)$$
$$\text{s.t.} \quad x'(t) = Ax(t) + Bu(t)$$
$$\quad\quad C1, C2, ...$$

The minimization is performed over the set of admissible solution vectors of the form $\boldsymbol{u} = [u(t_0)\ u(t_0 + \Delta t)\ u(t_0 + 2\Delta t)\ ...\ u(t_f)]$, where $\Delta t$ denotes a time step and each component $u(t_0 + n\Delta t), n \in \mathbb{N}$, can be either a scalar or a vector of scalars. A continuous-time representation of the solution vector may be $\boldsymbol{u} = \{u(t): t_0 \leq t \leq t_f\}$. The further constraints may be equality or inequality constraints, such as

$$C1: Ku \leq L,$$

$$C2: Mu = N,$$

where $K, L, M, N$ are constant matrices. In particular, two inequality constraints may be used to limit the control signal $u$ to an acceptable range defined by actuator limits: $\underline{u} \leq u(t) \leq \overline{u}$. The cost functional may refer to the cost of applying a particular control signal to the system, by which energy consumption, energy losses (e.g., thermal dissipation), mechanical wear etc. can be modeled.

To implement these or similar operations, the controller may comprise memory 121, processing circuitry 123, signal interfaces 122, 125, and one or more optimization processes 126. The memory 121 may be suitable for storing an executable computer program 124 and optionally configuration data, historic data and the like.

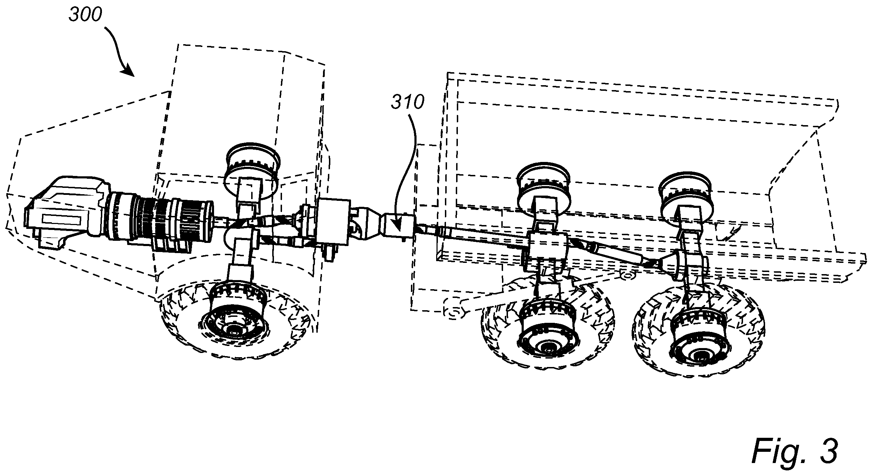

Many control problems in a vehicle electronic control unit (VCU) involve solving an optimization problem: a function to be minimized (for example energy losses), subject to some constraints like the actuator limits. One example of a control problem is the vehicle motion control for actuator coordination. In some embodiments, the technical system 110 is a propulsion system 310 of a road vehicle 300 (see figure 3). The propulsion system 310 may include electric motors for accelerating and decelerating the vehicle in a longitudinal direction (with optional power regeneration), friction brakes or other service brakes, path-controlling actuators (e.g., steering), stabilizers, transmission, suspension details and the like.

When the control optimization problem is formulated as a quadratic problem (QP), it can be solved by an arbitrary one of several methods which exist in the literature, such as interior-point (IP) method, active-set (AS) method, and Alternating Direction Method of Multipliers (ADMM). The optimization processes 126 in the controller 120 may implement one or more of these methods. Further, one or more of the of the optimization processes 126 may be a so-called virtual solver, a trained prediction model mimicking the behavior of an optimization solver on which it has been trained. Different optimization methods have different properties, and for some problems there can be differences in the execution time, speed of convergency, solution accuracy, etc. The previous properties are particularly relevant for control optimizers running in embedded systems in vehicles, with limitations like the precision of the floating-point arithmetic used.

To set up an optimization problem for the actuator coordination of the motion control problem, the inputs are vehicle parameters like mass, inertia, tire radius, tire cornering stiffness, and desired control targets like desired longitudinal and lateral forces, target service brake power and target powertrain power. The result of this setup stage can be formulated as a set of time-invariant matrices $H, f, \overline{u}, \underline{u}, A, b, A_{eq}, B_{eq}$ of a standard QP problem:

$$\min_{\boldsymbol{u}} \quad \frac{1}{2} u^T H u + f^T u$$
$$\text{s.t.} \quad \underline{u} \leq u \leq \overline{u}$$
$$\quad\quad Au \leq b$$
$$\quad\quad A_{eq} u = b_{eq}$$

The formulation as a standard QP problem may represent a linearization of a nonlinear vehicle model which is valid at a working point corresponding to a current state of the vehicle. As mentioned, several available optimizers are capable of solving this optimization problem. The output of an optimizer can be a solution vector $u$, which is - or can be transformed into - an actuator vector including for instance brake torques, electric machine torques, engine torques, and steering angles.

From a safety compliance perspective, it is important to guarantee that the optimization-based control method will give a good solution after a certain time; this is one way of achieving a low failure rate $\lambda$. Towards this goal, the embodiments in the present disclosure provide redundancy in solving an optimization problem and a decision-making stage to select a correct control output for safety compliance. As will be described in greater detail, a same optimization task is performed multiple times in the software using different code, using different algorithms or "virtual" optimizers or different instantiations of these. As explained, a virtual optimizer is a function which has been trained to predict what a conventional optimizer would give, based on its previous outputs.

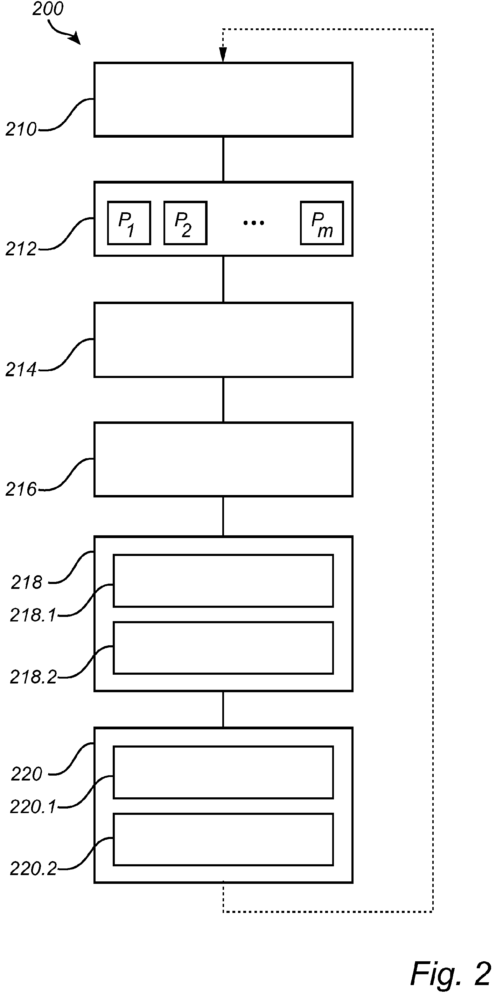

Figure 2 is a flowchart of a method 200 for controlling in real time a technical system, such as the generic technical system 110 (figure 1) or the vehicle propulsion system 310 (figure 3). The method 200 may be implemented in a controller 120 of the type illustrated in figure 1, e.g., by providing suitable software 124. If the technical system to be controlled is a system in a vehicle, the controller 120 may be installed in the same vehicle or outside the vehicle while in wireless communication with this. Also envisioned are hybrid configurations where vehicle-mounted principal components of the controller 120 are configured to offload demanding calculations to networked (or cloud) processing resources outside the vehicle, with which the components communicate through a wireless communication network, such as a cellular or non-cellular wide-area network. For example, the optimization processes 126 may be cloud resources, for which both the initialization data and the output data are limited in size, in the sense that the initialization data and the output data can be transmitted over the wireless communication network at runtime without inconvenience. This relieves the controller's 120 vehicle-mounted components of a substantial share of the computational effort needed to control the technical system 110 in the vehicle.

In a first step 210 of the method 200, a state of the system 110 is sensed. The sensing may be based on one or more values of the observation signal y fed to the controller 120, from which the state x can be completely or partially reconstructed, or based on data from or other sensors (not shown). The state x may be reconstructed by means of filtering, e.g., using a Kalman filter or an observer filter.

With the sensed state, in a second step 212, multiple independent executions of the optimization processes $P_1$, $P_2, \ldots, P_m$ are initiated, wherein each process is configured to solve a predefined optimization problem related to optimal control of the technical system. The executions of the optimization processes $P_1, P_2, \ldots, P_m$ may be independent in the sense that they do not exchange data among themselves; this however does not preclude the possibility that the executions are run in parallel on a common processor or on a common set of connected processors or processor cores. The optimization processes $P_1, P_2, \ldots, P_m$ are generally speaking numerical in nature or include a numerical part. They can include iterative algorithms and/or virtual solvers in the sense discussed above.

The optimization problem to be solved by the optimization processes $P_1, P_2, \ldots, P_m$ is predefined in the sense that it represents input data to the method 200 and/or it does not change over one execution of the method 200. In more detail, the governing equations are usually proper to the technical system - and thus substantially unchanged at runtime - and are to be combined with the sensed current state of the system before the optimization processes are initiated in the second step 212. At this point, the current state can be used to assign an initial value (e.g., valid at time $t_0$) to the optimization problem. If the system is time-variable and/or nonlinear, the current state may as well be needed as arguments to the functions $f, g$ (or to compute the matrices $H, f, \bar{u}, \underline{u}, A, b, A_{eq}, B_{eq}$) discussed above.

In a third step 214, a current solution vector is extracted from each optimization process after a predetermined delay. The solution vector from the $i^{\text{th}}$ optimization process $P_i$ may be denoted $u_i$. If the optimization process $P_i$ is iterative, the extracting may include reading a current iterate from a memory. More generally, the extracting may include issuing a command for the optimization process $P_i$ to output an approximate solution to the optimization problem which is based on the totality of information that the optimization process $P_i$ currently has at its disposal. The predetermined delay may have been determined in view of the real-time character of the control of the technical system, and more precisely in view of the need to update the control signal $u$ at suitable interval as the state of the system evolves. For example the predetermined delay may be included in the separation of two control-signal update points, and it may be configured so as to end sufficiently early that the controller 120 is able to generate a control signal $u$ from one of the solution vectors $u_1, u_2, u_3, \ldots$ extracted from the optimization processes $P_1, P_2, \ldots, P_m$. This can be practically achieved my measuring the processing time for the step of generating the control signal.

In an optional fourth step 216, one or more quality indicators $q_1, q_2, q_3, \ldots$ associated with an execution of a respective one of the optimization processes are obtained. The quality indicators will be used for weighting differences between pairs of the solution vectors $u_1, u_2, \ldots, u_m$. It is not essential to obtain quality indicators for all m optimization processes; instead neutral values (placeholders) can be used to weight any differences which involve one or two solution vectors without quality indicators. A quality indicator may be a final step size or another convergence indicator, or a flag which if positively valued indicates a problem or failure during the execution. Further still, the quality indicator could represent the status of the associated optimization process in its last iteration (e.g., based on a task watchdog timer), or the quality indicator could estimate the quality of the solution vector based on a plausibility check.

In a fifth step 218 of the method 200, differences $d_{ij}$ for pairs of the solution vectors are computed. The differences

$d_{ij}$ may be proportional to a norm of the difference $\|\boldsymbol{u}_i - \boldsymbol{u}_j\|$, wherein the norm may be an $L^p$ or $\ell^p$ norm with $p \geq 1$. Of particular interest are differences based on the Euclidean norm ($p = 2$) and the maximum norm ($p = \infty$). The differences may be collected in a similarity matrix, which is generally real, nonnegative, symmetric and has all zero diagonal elements.

The computation may optionally include an initial step of rescaling 218.1 the solution vectors to be mutually comparable. For example, if the solution vector extracted from the optimization process is denoted $\tilde{\boldsymbol{u}}_i$, the rescaled solution vector may be equal to

$$\boldsymbol{u}_i = \frac{\tilde{\boldsymbol{u}}_i - \mu_i}{\sqrt{\sigma_i}},$$

where $\mu_i$ is a mean (vector of component-wise means) of the solution vector $\tilde{\boldsymbol{u}}_i$ and $\sigma_i$ is a variance of the of the extracted solution vector $\tilde{\boldsymbol{u}}_i$. This will ensure the rescaled solution vector $\boldsymbol{u}_i$ has zero mean and unit variance. Alternatively, $\sigma_i$ may be a vector of component-wise variances and the division operation is a component-wise operation; this will ensure that *each component of* the rescaled solution vector $\boldsymbol{u}_i$ has zero mean and unit variance.

Optionally, if the formulation of the optimization problem allows the solution vectors to have different durations ($t_f$ is not fixed), the substep 218.1 may optionally include a temporal rescaling, by which it is ensured that all solution vectors $\boldsymbol{u}_1, \boldsymbol{u}_2, \ldots, \boldsymbol{u}_m$ have equal duration, so that differences can be formed by subtraction.

In a further optional step 218.2, which can be executed if one or more quality indicators $q_1, q_2, q_3, \ldots$ have been obtained, the differences are weighted by the quality indicators $q_1, q_2, q_3, \ldots$. For example, if high $q_i$ represents high quality, the weights may be applied as inverse weighting coefficients of the difference:

$$d_{ij} = \frac{\|\boldsymbol{u}_i - \boldsymbol{u}_j\|}{q_i q_j}.$$

If $\boldsymbol{u}_i$ or $\boldsymbol{u}_j$ or both lack quality indicator, say, because the optimization process does not deliver a quality indicator, it is possible to assign a neutral value (e.g., $q_i = 1$), whereby all solution vectors have at least a fictitious associated quality indicator.

In a sixth step 220, on the basis of the differences $d_{ij}$, at least one of the solution vectors is selected for use in controlling the technical system 110.

The sixth step 220 may for example include performing a dimensionality reduction 220.1, such as a multidimensional scaling (MDS) operation or a principal coordinate analysis (PCoA). The output of the dimensionality reduction 220.1 is fed to the next step; it may optionally be used to visualize the similarity between different outputs as well.

Based on the output of the dimensionality reduction 220.1, a voting scheme 220.2 is executed. The voting scheme 220.2 includes forming clusters of the solution vectors $\boldsymbol{u}_1, \boldsymbol{u}_2, \ldots, \boldsymbol{u}_m$, and selecting the solution vector to be used from the largest one of the clusters. In a particular implementation, there is initially formed a single (k = 1) cluster of solution vectors, and it is checked whether a point-to-centroid distance is within a predefined tolerance. The centroid can be the barycenter of the cluster in reduced-dimension coordinate space. The grouping of the solution vectors $\boldsymbol{u}_1, \boldsymbol{u}_2, \ldots, \boldsymbol{u}_m$ into clusters may be performed by executing a k-means clustering algorithm. If the point-to-centroid distance is too large, the number k is incremented by one unit, and a new grouping into k clusters is formed. The point-to-centroid distance is calculated for the new grouping, and for each cluster. If it still does not meet the predefined threshold, k can be incremented further until it reaches a limit of m - 1, where m is the number of solution vectors, beyond which it is no longer meaningful to form clusters. Otherwise, when a grouping has been achieved where the point-to-centroid distance is below the predefined threshold for all clusters, the cluster with the largest number of solution vectors is selected; in that cluster, the solution vector closest to the centroid is selected for use in controlling the technical system 110.

If there is a draw, i.e. two or more clusters include the same number of solution vectors and this is the largest number, then a heuristic is used to choose one cluster. One heuristic it to choose the solution vector that resembles a previous solution (or multiple previous solutions) from the optimization processes $P_1, P_2, \ldots, P_m$ most closely. The resemblance may be measured by a norm of the difference. Another heuristic is based on a comparison with the output of a virtual solver of the type introduced; with this information available, the cluster providing the solution vector that resembles the output of the virtual solver most closely may be selected as the winner of the voting scheme 220.2.

To illustrate this implementation of the selection step 220, it is assumed that m = 4 optimization processes are executed and each solution vector includes five variables:

$$\boldsymbol{u}_1 = \begin{bmatrix} 0.600 & 0.800 & 0.100 & 0.350 & 0.890 \end{bmatrix}$$

$$\boldsymbol{u}_2 = [0.650 \quad 0.770 \quad 0.170 \quad 0.380 \quad 0.850]$$

$$\boldsymbol{u}_3 = [0.615 \quad 0.770 \quad 0.120 \quad 0.360 \quad 0.880]$$

$$\boldsymbol{u}_4 = [0.400 \quad 0.500 \quad 0.010 \quad 0.600 \quad 0.660]$$

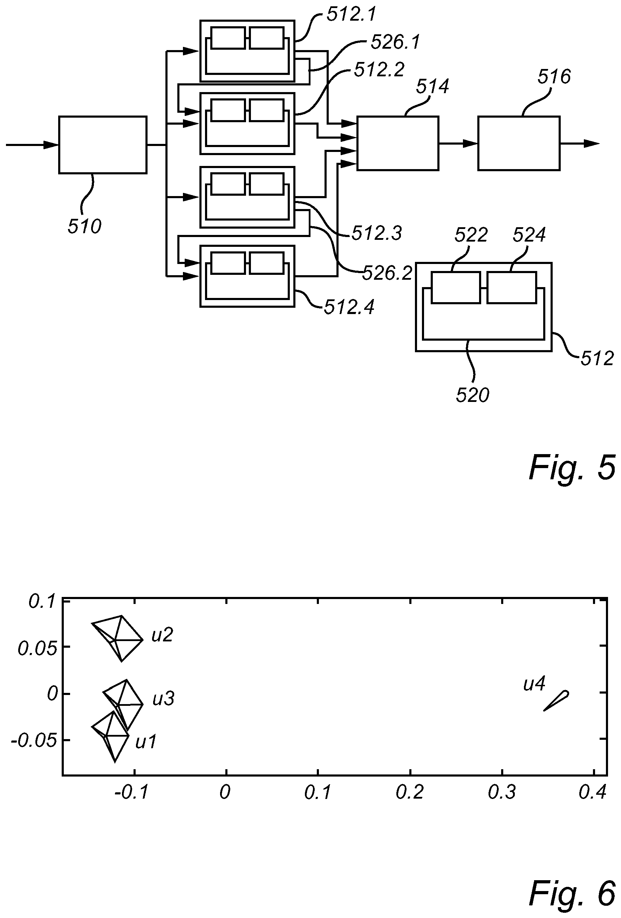

A dimensionality reduction 220.1 followed by a grouping operation provide the two clusters seen in figure 6, where each coordinate axis represents a reduced dimension. Figure 6 is a so-called star plot, in which $\boldsymbol{u}_1$ to $\boldsymbol{u}_4$ are represented as 'stars', with centers in the coordinates of the reduced dimensions, and the 'spokes' (lines from the center of the star), are proportional in length to each component of the respective solution vector. For example, in figure 6, the long spoke is the fourth component of $\boldsymbol{u}_4$, which is equal to 0.600, and it is much larger than the respective corresponding fourth components of $\boldsymbol{u}_1$, $\boldsymbol{u}_2$ and $\boldsymbol{u}_3$. On the other hand, the remaining 'spokes' of $\boldsymbol{u}_4$ are very short in length, because those components are much smaller compared with the respectively components of $\boldsymbol{u}_1$, $\boldsymbol{u}_2$ and $\boldsymbol{u}_3$. The solution vector to be used in the control of the technical system 110 is selected from the left cluster since it has the larger number of members, and solution $\boldsymbol{u}_3$ is visibly closest to the centroid of the left cluster. Accordingly, the optimization process $P_3$ is the winning one in the voting scheme 220.2 and the next update of the control signal $u$ will be derived from solution vector $\boldsymbol{u}_3$.

It is noted for completeness that the selection step 220 may include the voting scheme 220.2 on its own, that is, without preprocessing the solution vectors $\boldsymbol{u}_1$, $\boldsymbol{u}_2$, ... , $\boldsymbol{u}_m$ by a dimensionality reduction.

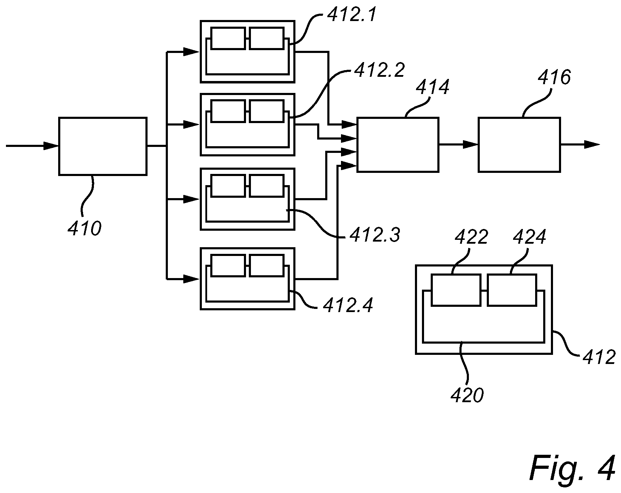

Figure 4 is a functional block diagram illustrating a working principle of some embodiments herein. A problem setup section 410 receives as input parameters indicative of a current state of the technical system 110 (e.g., a vehicle propulsion system 310) and a setpoint signal acting as control target. The problem once set up is fed to four parallel optimization processes 412. As shown in the lower left enlargement, each optimization process 412 includes an optimization solver 420, a task watchdog timer 422 and an observer 424. In one example, the task watchdog timer 422 may be configured to react after 20 ms if the control signal is needed in 100 ms. A quality indicator for the optimization process 412 may be derived from the observer 424.

In one example, the respective optimization processes 412 implement an interior-point (IP) QP solver 412.1, an active-set (AS) QP solver 412.2, an ADMM QP solver 412.3 and a QP solver of a further type. The optimization processes 412 output solution vectors and quality indicators, which are fed to a solution similarity calculation section 414. The solution similarity calculation section 414 provides the differences $d_{ij}$, which are calculated in accordance with step 218 of the method 200 and which may be formatted as a similarity matrix. Then the solution similarity calculation section 414 supplies them to a decision-making section 416, which is responsible for the execution of step 220.

Figure 5 shows a variation of this setup. It differs from the one according to figure 4 in that the second 512.2 and fourth 512.4 optimization processes are virtual solvers. More precisely, as indicated by the interconnectors 526.1 and 526.2, the second 512.2 and fourth 512.4 optimization processes include artificial neural networks which have been trained to mimic the behavior of the first 512.1 and third 512.3 optimization solvers. The training may continue at runtime or during maintenance intervals. Apart from the presence of the virtual solvers 512.2, 512.4, the setup according to figure 5 functions in the same manners as the one in figure, and a complete description is therefore omitted in the interest of conciseness of this disclosure.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

**1.** A method (200) for controlling an over-actuated technical system (110, 310) in real time, comprising:

sensing (210) a state of the technical system;
with the sensed state, initiating (212) independent executions of a plurality of optimization processes ($P_1$, $P_2$, $P_3$, ...) configured to solve a predefined optimization problem related to optimal control of the technical system;
after a predetermined delay, extracting (214) a current solution vector ($\boldsymbol{u}_1$, $\boldsymbol{u}_2$, $\boldsymbol{u}_3$, ...) from each optimization process;
**characterized by**
computing (218) differences ($d_{ij} \sim \| \boldsymbol{u}_i - \boldsymbol{u}_j \|$) for pairs of the solution vectors; and on the basis of the differences, selecting (220) at least one of the solution vectors for use in controlling the technical system, wherein the selection of said one of the solution vectors includes executing a voting scheme (220.2) in which clusters of the solution vectors are formed and the solution vector to be used is selected from the largest one of the clusters.

2. The method of claim 1, wherein the selection of said one of the solution vectors includes singling out a best solution vector and/or eliminating insufficiently converged solution vectors.

3. The method of claim 1 or 2, further comprising:

obtaining (216) a quality indicator ($q_1$, $q_2$, $q_3$, ...) for the execution of each optimization process,
wherein the computation of the differences includes weighting (218.2) the differences in accordance with the quality indicators of the respective solution vectors.

4. The method of claim 1, 2 or 3, wherein the computation of the differences includes initially rescaling (218.1) the solution vectors to be mutually comparable.

5. The method of any of the preceding claims, wherein the selection of said one of the solution vectors includes performing a dimensionality reduction (220.1).

6. The method of claim 5, wherein the dimensionality reduction includes a multidimensional scaling operation.

7. The method of any of the preceding claims, wherein the voting scheme includes forming $k$ clusters, where the number $k$ is initialized to $k = 1$ and then incremented as needed until a predefined point-to-centroid distance threshold is fulfilled.

8. The method of claim 7, wherein the grouping of the solution vectors includes executing a k-means clustering algorithm.

9. The method of any of the preceding claims, wherein at least one of the optimization processes is iterative.

10. The method of any of the preceding claims, wherein at least one of the optimization processes is a trained prediction model.

11. The method of any of the preceding claims, wherein the over-actuated technical system is a propulsion system (310) in a road vehicle (300).

12. A controller (120) configured to control a technical system (110, 310) in real time, the controller comprising memory (121), a signal interface (122) and processing circuitry (123) configured to perform the method of any of the preceding claims.

13. A computer program (124) comprising instructions for causing the controller of claim 12 to perform the method of any of claims 1 to 11.


**Patentansprüche**

1. Verfahren (200) zum Steuern eines überaktuierten technischen Systems (110, 310) in Echtzeit, umfassend:

Erfassen (210) eines Zustands des technischen Systems;
mit dem erfassten Zustand, Einleiten (212) von unabhängigen Ausführungen einer Vielzahl von Optimierungs-prozessen ($P_1$, $P_2$, $P_3$, ...) , die dazu konfiguriert sind, ein vordefiniertes Optimierungsproblem im Zusammenhang mit der optimalen Steuerung des technischen Systems zu lösen;
nach einer vorbestimmten Verzögerung, Extrahieren (214) eines aktuellen Lösungsvektors ($u_1$, $u_2$, $u_3$, ...) aus jedem Optimierungsprozess;
**gekennzeichnet durch**
Berechnen (218) von Differenzen ($d_{ij} \sim \|u_i - u_j\|$) für Paare der Lösungsvektoren; und
auf Basis der Differenzen, Auswählen (220) mindestens eines der Lösungsvektoren zur Verwendung bei der Steuerung des technischen Systems, wobei die Auswahl des einen der Lösungsvektoren das Ausführen eines Wahlschemas (220.2) enthält, in dem Cluster der Lösungsvektoren gebildet werden und der zu verwendende Lösungsvektor aus dem größten der Cluster ausgewählt wird.

2. Verfahren nach Anspruch 1, wobei die Auswahl des einen der Lösungsvektoren das Herausgreifen eines besten Lösungsvektors und/oder das Eliminieren von unzureichend konvergierten Lösungsvektoren enthält.

3. Verfahren nach Anspruch 1 oder 2, ferner umfassend:

   Erhalten (216) eines Qualitätsindikators ($g_1$, $q_2$, $q_3$, ...) für die Ausführung jedes Optimierungsprozesses, wobei die Berechnung der Differenzen das Gewichten (218.2) der Differenzen in Übereinstimmung mit den Qualitätsindikatoren der jeweiligen Lösungsvektoren enthält.

4. Verfahren nach Anspruch 1, 2 oder 3, wobei die Berechnung der Differenzen zunächst das Neuskalieren (218.1) der Lösungsvektoren enthält, damit diese miteinander vergleichbar sind.

5. Verfahren nach einem der vorhergehenden Ansprüche, wobei die Auswahl eines der Lösungsvektoren eine Dimensionsreduktion (220.1) enthält.

6. Verfahren nach Anspruch 5, wobei die Dimensionsreduktion eine multidimensionale Skalierungsoperation enthält.

7. Verfahren nach einem der vorhergehenden Ansprüche, wobei das Wahlschema das Bilden von k Clustern enthält, wobei die Zahl k auf k = 1 initialisiert und dann gegebenenfalls erhöht wird, bis ein vordefinierter Schwellenwert für den Punkt-zu-Zentroid-Abstand erreicht ist.

8. Verfahren nach Anspruch 7, wobei das Gruppieren der Lösungsvektoren das Ausführen eines $k$-Means-Clustering-Algorithmus enthält.

9. Verfahren nach einem der vorhergehenden Ansprüche, wobei mindestens einer der Optimierungsprozesse iterativ ist.

10. Verfahren nach einem der vorhergehenden Ansprüche, wobei mindestens einer der Optimierungsprozesse ein trainiertes Vorhersagemodell ist.

11. Verfahren nach einem der vorhergehenden Ansprüche, wobei das überaktuierte technische System ein Antriebssystem (310) in einem Straßenfahrzeug (300) ist.

12. Steuerung (120), die dazu konfiguriert ist, ein technisches System (110, 310) in Echtzeit zu steuern, wobei die Steuerung einen Speicher (121), eine Signalschnittstelle (122) und einen Verarbeitungsschaltkreis (123) umfasst, der dazu konfiguriert ist, das Verfahren nach einem der vorhergehenden Ansprüche durchzuführen.

13. Computerprogramm (124), das Anweisungen umfasst, um die Steuerung von Anspruch 12 dazu zu veranlassen, das Verfahren nach einem der Ansprüche 1 bis 11 durchzuführen.

**Revendications**

1. Procédé (200) de commande en temps réel d'un système technique suractionné (110, 310), comprenant :

   la détection (210) d'un état du système technique ;
   dans l'état détecté, le lancement (212) des exécutions indépendantes d'une pluralité de processus d'optimisation ($P_2$ $P_2$, $P_3$,...) configuré pour résoudre un problème d'optimisation prédéfini lié au contrôle optimal du système technique ;
   après un délai prédéterminé, l'extraction (214) d'un vecteur de solution courant ($u_1$, $u_2$, $u_3$, ...) de chaque processus d'optimisation ;
   **caractérisé par**
   le calcul (218) de différences ($d_{ij} \sim \|u_i - u_j\|$) pour des paires de vecteurs de solution ; et sur la base de ces différences, la sélection (220) d'au moins un des vecteurs de solution à utiliser dans la commande du système technique, la sélection dudit vecteur de solution comprenant l'exécution d'un schéma de vote (220.2) dans lequel des grappes de vecteurs de solution sont formées et le vecteur de solution à utiliser est sélectionné parmi la plus grande des grappes.

**2.** Procédé selon la revendication 1, dans lequel la sélection dudit vecteur parmi les vecteurs de solution comprend le fait de distinguer un vecteur de meilleure solution et/ou d'éliminer des vecteurs de solution insuffisamment convergents.

**3.** Procédé selon la revendication 1 ou 2, comprenant en outre : l'obtention (216) d'un indicateur de qualité ($q_2$, $q_2$, $q_3$, ...) pour l'exécution de chaque processus d'optimisation, le calcul des différences comprenant la pondération (218.2) des différences en fonction des indicateurs de qualité des vecteurs de solution respectifs.

**4.** Procédé selon la revendication 1, 2 ou 3, dans lequel le calcul des différences comprend la remise à l'échelle initiale (218.1) des vecteurs de solution pour qu'ils soient mutuellement comparables.

**5.** Procédé selon l'une quelconque des revendications précédentes, dans lequel la sélection dudit un des vecteurs de solution comprend l'exécution d'une réduction de dimensionnalité (220.1).

**6.** Procédé selon la revendication 5, dans lequel la réduction de dimensionnalité comprend une opération de mise à l'échelle multidimensionnelle.

**7.** Procédé selon l'une quelconque des revendications précédentes, dans lequel le schéma de vote comprend la formation de k grappes, le nombre k étant initialisé à k = 1 puis incrémenté en fonction des besoins jusqu'à ce qu'un seuil de distance point-centroïde prédéfini soit atteint.

**8.** Procédé selon la revendication 7, dans lequel le regroupement des vecteurs de solution comprend l'exécution d'un algorithme de regroupement de moyennes de k.

**9.** Procédé selon l'une quelconque des revendications précédentes, dans lequel au moins l'un des processus d'optimisation est itératif.

**10.** Procédé selon l'une quelconque des revendications précédentes, dans lequel au moins l'un des processus d'optimisation est un modèle de prédiction entraîné.

**11.** Procédé selon l'une quelconque des revendications précédentes, dans lequel le système technique suractionné est un système de propulsion (310) dans un véhicule routier (300).

**12.** Organe de commande (120) configuré pour commander un système technique (110, 310) en temps réel, l'organe de commande comprenant une mémoire (121), une interface de signal (122) et un circuit de traitement (123) configuré pour exécuter le procédé selon l'une quelconque des revendications précédentes.

**13.** Programme informatique (124) comprenant des instructions pour amener l'organe de commande selon la revendication 12 à exécuter le procédé selon l'une quelconque des revendications 1 à 11.

*Fig. 1*

*Fig. 2*

*Fig. 3*

Fig. 4

*Fig. 5*

*Fig. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2597539 A1